# EUROPEAN PATENT APPLICATION

(11) **EP 4 538 008 A1**
(43) Date of publication of application: **16.04.2025**
(21) Application number: 24206214.9
(22) Date of filing: 11.10.2024
(51) Int. Cl.: B27N 3/24, B30B 5/04, B30B 5/06, B27N 3/06, B30B 15/02, B29C 43/48, B32B 37/10, B27N 3/18, B27N 7/00, E04B 1/62

(54) **DEVICE WITH LOCKING MECHANISM AND METHOD FOR PRODUCING A NON-PLANAR INSULATED CLADDING PANEL AND INSULATED CLADDING PANEL OBTAINED BY IT**

(30) Priority: 12.10.2023 BE 202305845
(71) Applicant: Joris Ide NV, 8750 Wingene (BE)
(72) Inventor: BROCHE, Jasper, 8750 Wingene (BE); HERMANS, Dieter, Wingene (BE); VEKEMANS, Daniel, 8750 Wingene (BE); WAUTERS, Jan, 8750 Wingene (BE)
(74) Representative: Brantsandpatents bv

(57) **Abstract**

The present invention relates to a device for producing insulated cladding panels, comprising a double-belt press, wherein at least one belt comprises counter-blocks (16), wherein each counter-block comprises a protrusion (5) near two ends, wherein the protrusion comprises an opening (7) or a thickening (6) at a free end, wherein each counter-block is placed on a link (20) of the belt, wherein a protrusion (5) is disposed through an opening in the link, wherein a locking mechanism (1) with a bolt (3) is placed near two ends of the link, wherein the bolt can be moved between an open and closed position, wherein in the closed position the bolt is positioned between the link and the thickening, or the bolt is positioned in the opening in the protrusion, and wherein in the open position there is a free passage for the thickening, or the bolt is positioned outside the opening in the protrusion. The invention also relates to a method and a use.

## Description

### TECHNICAL FIELD

The invention relates to a device for producing non-flat insulated cladding panels, more particularly a device with a closing mechanism for fastening counter-blocks. The invention also relates to a method for producing a non-flat insulated cladding panel and a use.

### PRIOR ART

Insulated cladding panels have been used for many years as insulation, floor, wall or roof panels for cladding or constructing walls, floors, roofs, etc. An insulated cladding panel has a bottom layer and a top layer with an insulation layer in between. These three layers are bonded together. The bonding usually happens during the compression of the three layers. A double-belt press is usually used for this, as this allows insulated cladding panels to be produced in a continuous process and then cut to length.

With non-flat insulated cladding panels, at least the bottom layer or the top layer is non-flat. For example, the bottom layer is corrugated. A non-flat bottom layer and/or top layer strengthens the insulated cladding panel and also has an aesthetic effect. During production in the double-belt press, it is necessary to provide counter-blocks on a non-flat side of the insulated cladding panel. The counter-blocks follow a profile on the non-flat side, so that even deeper located parts of the non-flat side are pressed down. These counter-blocks are either screwed down or attached with magnets. Screwing down the counter-blocks is disadvantageous if the double-belt press is used to produce insulated cladding panels with different profiles. Whenever a different profile is used, it is necessary to swap the counter-blocks. Loosening and tightening the counter-blocks is a time-consuming task. This disadvantage does not exist with counter-blocks that are attached using magnets. Due to contamination between a counter-block and a band to which the counter-block is attached, for example insulation material, it often happens that a counter-block becomes loose and falls off. This leads to a production interruption, but also to production loss because the non-flat insulated cladding panel is usually damaged or of inferior quality. This is particularly a problem if the intermediate insulation layer is injected between the bottom layer and the top layer just before compression or if the intermediate insulation layer is glued to the bottom layer and the top layer. Production also often takes place at a higher temperature, which is often detrimental to the magnetic properties of the magnets, making the problem worse.

US9676018 relates to a method and a device for forming the profile of deformable materials and deformable tubular sections.

US2023/039750 describes an insulated panel and a method for producing such a panel.

The present invention aims to at least find a solution to some of the above-mentioned problems or disadvantages.

### SUMMARY OF THE INVENTION

In a first aspect, the present invention relates to a device according to claim 1.

This device is advantageous because a counter-block is secured mechanically to the at least one belt by the locking mechanism. Even if during the production of the non-flat insulated cladding panel, contamination comes between the at least one belt and the counter-block or higher temperatures are used during production, the counter-block will not detach from the at least one belt. This removes a frequent cause for production interruptions and production loss. In addition, the locking mechanism allows the counter-blocks to be quickly installed and changed. No screwing is necessary for this. By moving the bolt of the locking mechanisms from the closed to the open position, the counter-blocks can be immediately removed and by moving the bolt of the locking mechanisms from the closed to the open position, the counter-blocks are immediately attached to the at least one belt. This results in an enormous time saving when switching the device to a non-flat insulated cladding panel with a different profile.

Preferred embodiments of the device are set out in claims 2-9.

A specific preferred embodiment concerns a device according to claim 2.

This preferred form is particularly advantageous because the closing mechanisms makes it possible to move all the bolts from an open to a closed position automatically by moving the links of the at least one belt along the closing mechanisms. An operator of the device only needs to place the counter-blocks on the at least one belt, but does not need to lock the counter-blocks, thus enabling even greater time savings.

In a second aspect, the present invention relates to a method according to claim 10.

This method has the advantage, inter alia, that when starting the production of a non-flat insulated cladding panel, a double-belt press can be quickly equipped with counter-blocks suitable for the profile of the non-flat insulated cladding panel. It is only necessary to lock the counter-blocks using locking mechanisms. An additional advantage of the method is that the counter-blocks are firmly mechanically attached, which means that the chance of a counter-block coming loose and falling, for example in the event of contamination or at higher temperatures during production, is virtually non-existent. This results in fewer production interruptions and reduced production losses due to damaged or lower quality non-flat insulated cladding panels.

Preferred embodiments of the method are described in dependent claims 11-14.

In a third aspect, the present invention relates to a non-flat insulated cladding panel according to claim 15.

Such a non-flat insulated cladding panel is advantageous because of the high quality of finishing. Due to the fact that the counter-blocks in the double-belt press are guaranteed to remain attached to the belt pressing against the non-flat layer, the bottom layer, the intermediate insulation layer, and the top layer are very well bonded to each other, making the chance of the layers coming apart over time very small. An additional advantage is that due to a low occurrence of production interruptions and production losses, the high quality of finishing can be obtained at the same or lower production cost.

In a fourth aspect, the present invention relates to a use according to claim 16.

This use results in an improved production of non-flat insulated cladding panels with an injected intermediate insulation layer or a glued intermediate insulation layer. The intermediate insulation layer is injected between the bottom layer and the top layer just before compressing a bottom layer, top layer, and the intermediate insulation layer in the double-belt press, after which the intermediate insulation layer expands. It is possible that the injected intermediate insulation layer is initially still partially fluid and flows between a belt of the double-belt press and a counter-block. When gluing an intermediate insulation layer, it is possible that glue will flow between a belt of the double-belt press and a counter-block. Using the device according to the first aspect and/or the method according to the second aspect prevents the counter-block from becoming detached from the belt and falling. This means there are fewer production interruptions and there is also less production loss due to damaged or lower quality non-flat insulated cladding panels.

### DESCRIPTION OF THE DRAWINGS

**Figure 1** shows a perspective view of a locking mechanism according to an embodiment of the present invention.
**Figure 2** shows a schematic cross-section of a device according to an embodiment of the present invention.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

The terms "comprise," "comprising," "consist of," "consisting of," "provided with," "include," "including," "contain," "containing," are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

Furthermore, the terms first, second, third and the like are used in the description and in the claims to distinguish between similar elements and not necessarily to describe a sequential or chronological order, unless specified. It is to be understood that the terms so used are interchangeable under appropriate circumstances and that the embodiments of the invention described herein may operate in sequences other than those described or illustrated herein.

In the context of this document, an insulated cladding panel is a multilayer panel comprising a bottom layer, a top layer and an intermediate insulation layer. The bottom layer, the intermediate insulation layer, and the top layer are bonded together. The insulated cladding panel extends in a longitudinal direction. Insulation material of the intermediate insulation layer can be an expanded foam, such as a polyurethane foam (PUR foam) or a polyisocyanurate foam (PIR foam), rock wool, wood-based insulation or another suitable insulation material. The insulation material has adhesive properties, which means that the insulation material adheres to the bottom layer and the top layer, such as PUR and PIR. Alternatively, the insulation material is glued to bottom layer and top layer using glue, such as rock wool strips or wood-based insulation. The bottom layer, the top layer, or the bottom layer and the top layer are made of sheet material, preferably of metal, more preferably of aluminum. Alternatively, the bottom layer, the top layer or the bottom layer and the top layer are made of foil/film material, preferably an aluminum foil or a polyester-containing foil, of pre-formed cardboard, of fiber-reinforced plastic, preferably glass fiber-reinforced plastic, or of another suitable material. A non-flat insulated cladding panel is an insulated cladding panel where at least the bottom layer or the top layer has a non-flat profile in a cross-section perpendicular to the longitudinal direction. Non-limiting examples of non-flat profiles are a sinusoidal wave pattern, a square wave pattern, a triangular wave pattern, etc. The non-flat profile can be either regular or irregular in the mentioned cross-section. It is clear that the intermediate insulation layer at a contact surface with a bottom layer or top layer with a non-flat profile also follows the non-flat profile. The profile preferably remains the same along the longitudinal direction.

In a first aspect, the invention concerns a device for producing a non-flat insulated cladding panel.

The device comprises a double-belt press for compressing the bottom layer, the top layer, and the intermediate insulation layer of the non-flat insulated cladding panel. The double-belt press comprises a first belt and a second belt. The first belt and the second belt extend along a longitudinal direction. The first belt and the second belt are arranged at a distance from each other in a height direction, perpendicular to the longitudinal direction, to form a passage for the non-flat insulated cladding panel. When a device is in operation, the first belt and the second belt have opposite directions of rotation, causing a surface of the first belt and a surface of the second belt bounding the passage to move in the same direction, carrying the non-flat insulated cladding panel through the passage. The non-flat insulated cladding panel is compressed in the passage by the first belt and the second belt, bonding the bottom layer, the intermediate insulation layer, and the top layer. At least one belt from the group formed by the first belt and the second belt includes detachable counter-blocks for pressing against a non-flat layer of the insulated cladding panel. It is clear that if for example the bottom layer is the non-flat layer and for example the first belt presses against the bottom layer, then the first belt includes detachable counter-blocks. It will also be apparent that if both the bottom layer and the top layer are non-flat, then the first belt and the second belt include counter-blocks. It is equally clear that both the first belt and the second belt can press against the bottom layer or against the top layer.

The counter-blocks follow a profile of the non-flat layer, so that deeper located parts of the non-flat layer also become pressed down against the intermediate insulation layer. This ensures good adhesion of the non-flat layer to the intermediate insulation layer. Detachable counter-blocks are advantageous to produce non-flat insulated cladding panels with different profiles on the device. Depending on the profile of the non-flat layer, corresponding counter-blocks are placed on the at least one belt.

According to a preferred embodiment, each counter-block comprises a protrusion near two opposite ends along a transverse direction. The transverse direction is perpendicular to the longitudinal direction and perpendicular to the height direction. By nearby is meant that in the transverse direction a first protrusion is located in a first third of the counter-block and a second protrusion is located in a last third of the counter-block. Preferably, the first protrusion is in a first quarter of the counter-block and the second protrusion is in a last quarter. More preferably, the first protrusion is in a first fifth and the second protrusion is in a last fifth. The protrusion extends perpendicular to a surface of the counter-block.

At a free end of the protrusion there is a thickening. Preferably the protrusion is cylindrical and the thickening a disk with a diameter is larger than a diameter of the cylindrical shape. It is clear that other suitable shapes for the protrusion and thickening are possible. It is also possible that the protrusion does not have to have the same dimensions over its entire length. For example, the protrusion could comprise two cylindrical shapes with a common cylindrical axis, namely a first cylindrical shape near the counter-block and a second cylindrical shape on the first cylindrical shape, wherein the thickening is at a free end of the second cylindrical shape.

Alternatively, the protrusion includes an opening. The opening is preferably parallel to the surface of the counter-block on which the protrusion extends. The opening is preferably right through the protrusion. The opening is suitable for placing an element through the protrusion.

The at least one belt is formed from several interconnected links. The interconnected links run in a loop over wheels, rollers or a combination of both. The links preferably include a substantially flat surface for attaching counter-blocks. This allows a counter-block to be designed as a flat plate, on which additional elements are placed to form the profile that matches the profile of the non-flat layer. Preferably, the substantially flat surfaces of the links in parts where the at least one belt runs straight through, in other words between both ends of the at least one belt, abut against each other. This is advantageous in the case a flat insulated cladding panel is produced, as this gives the at least one belt a flat profile in the transverse direction. This is additionally advantageous because it provides maximum support for the counter-blocks and prevents them from wobbling in the longitudinal direction.

Each counter-block is placed on a first side of a link. The first side is preferably the substantially flat surface. In the passage, the first side is parallel to the longitudinal direction and the transverse direction. Preferably, the counter-blocks abut each other in sections where the at least one belt runs straight, so that over a full length of the non-flat insulated cladding panel, pressure is applied against the non-flat layer. Preferably, a counter-block is placed on each link. The link comprises an opening near two opposite ends along the transverse direction through which a protrusion is placed. On an opposite second side of the link, a locking mechanism is disposed near each of the two opposite ends. The locking mechanism includes a bolt that is movable from an open position to a closed position and back. In the closed position, the bolt is positioned between the second side of the link and the thickening of the protrusion, in the case where there is a thickening at the end of the protrusion. In the closed position, the bolt is positioned in the opening in the protrusion, in the event the protrusion comprises an opening. In the open position there is a free passage for the thickening of the protrusion through the opening in the link, in the case where there is a thickening at the end of the protrusion. In the open position, the bolt is positioned outside the opening in the protrusion, in the event the protrusion comprises an opening. It is clear that in the closed position the counter-block is mechanically attached to the link by the locking mechanism and that in the open position the counter-block is not attached to the link and can be removed. The locking mechanism is preferably made of metal.

This device is advantageous because a counter-block is secured mechanically to the at least one belt by the locking mechanism. Even if during the production of the non-flat insulated cladding panel, contamination comes between the at least one belt and the counter-block or higher temperatures are used during production, the counter-block will not detach from the at least one belt. This removes a frequent cause for production interruptions and production loss. In addition, the locking mechanism allows the counter-blocks to be quickly installed and changed. No screwing is necessary for this. By moving the bolt of the locking mechanisms from the closed to the open position, the counter-blocks can be immediately removed and by moving the bolt of the suspension mechanisms from the open to the closed position, the counter-blocks are immediately attached to the at least one belt. This results in an enormous time saving when switching the device to a non-flat insulated cladding panel with a different profile.

According to a preferred embodiment, the locking mechanism comprises a projection on the bolt. The projection extends in a direction transverse to the first side of the link. The projection has, viewed in a plane parallel to the first side of the link, a cross-section which, viewed in a direction transverse to the transverse direction, is gradually wider. The projection and the bolt are preferably one metal piece. The projection is advantageous for moving the bolt from the open position to the closed position and back by pressing against the projection.

According to a further embodiment, the double-belt press comprises a closing mechanism along the transverse direction near two opposite ends. A first closing mechanism is intended for closing the locking mechanism near a first end of a link and a second closing mechanism is intended for closing the locking mechanism near a second opposite end of the link. The closing mechanism can be moved from a first position to a second position and back. The closing mechanism can be moved manually or automatically from the first to the second position and back. Preferably, the closing mechanism is automatically movable from the first to the second position and back. The closing mechanism presses in the first position against the projection for moving the bolt to the closed position. The closing mechanism presses against the projection in the said plane parallel to the first side of the link in which the projection has a cross-section which, seen in the transverse direction, is gradually wider. The cross-section is in the mentioned plane and in the transverse direction on a side directed towards the closing mechanism and seen against a direction of movement of the link, gradually wider. This causes the closing mechanism in the first position to push the projection and thus the bolt away from the closing mechanism as the link moves along the closing mechanism. The closing mechanism is thus placed on a side of the open position of the bolt. The cross section is preferably straight on the side facing the closing mechanism. This is advantageous for continuous displacement at a constant speed of the bolt. Alternatively, the cross-section on the side facing the closing mechanism is a smooth curve. This is advantageous for continuous displacement of the bolt from the open to the closed position. For example, the smooth curve is a concave curve seen from the closing mechanism, causing the bolt to move slowly at first and then faster. For example, the smooth curve is an S-curve, causing the bolt to move slowly at first, then faster, and then slowly again. In the second position of the closing mechanism, there is free passage for the projection. This means that regardless of whether the bolt is in the open position or in the closed position, the closing mechanism does not change the position of the bolt. The closing mechanism comprises for example, a plate, a wedge, one or more rollers or other suitable means for pressing against the projection of the bolt.

This preferred form is particularly advantageous because the closing mechanisms makes it possible to move all the bolts from an open to a closed position automatically by moving the links of the at least one belt along the closing mechanisms. An operator of the device only needs to place the counter-blocks on the at least one belt, but does not need to lock the counter-blocks, thus enabling even greater time savings. A closing mechanism only needs to be moved to the first position once for this to happen.

According to another further embodiment, the double-belt press comprises an opening mechanism along the transverse direction near two opposite ends. A first opening mechanism is intended for opening the locking mechanism near a first end of a link and a second opening mechanism is intended for opening the locking mechanism near a second opposite end of the link. The opening mechanism can be moved from a first position to a second position and back. The opening mechanism can be moved manually or automatically from the first to the second position and back. Preferably the opening mechanism is automatically movable from the first to the second position and back. The opening mechanism in the first position presses against the projection to move the bolt to the open position. The opening mechanism presses against the projection in the said plane parallel to the first side of the link in which the projection has a cross-section which, seen in the transverse direction, is gradually wider. The cross-section is in the mentioned plane and in the transverse direction on a side directed towards the opening mechanism and seen against a direction of movement of the link, gradually wider. This causes the opening mechanism in the first position to push the projection and thus the bolt away from the opening mechanism as the link moves along the opening mechanism. The opening mechanism is therefore placed on a side of the closed position of the bolt. The cross section is preferably straight on the side facing the opening mechanism. This is advantageous for continuous displacement at a constant speed of the bolt. Alternatively, the cross-section on the side facing the opening mechanism is a smooth curve. This is advantageous for a continuous displacement of the bolt from the closed to the open position. For example, the smooth curve is a concave curve seen from the opening mechanism, causing the bolt to move slowly at first and then faster. For example, the smooth curve is an S-curve, causing the bolt to move slowly at first, then faster, and then slowly again. In the second position of the opening mechanism, there is a free passage for the projection. This means that regardless of whether the bolt is in the open position or in the closed position, the opening mechanism does not change the position of the bolt. The opening mechanism comprises for example, a plate, a wedge, one or more rollers or other suitable means for pressing against the projection of the bolt.

This embodiment has, mutatis mutandis, the same advantages as the previously described embodiment of the closing mechanism.

According to a preferred embodiment, the double-belt press comprises closing mechanisms and opening mechanisms. The closing mechanisms and the opening mechanisms are as previously described. This embodiment is advantageous because it allows the changing of counter-blocks to be done very quickly. An operator of the device only needs to place the counter-blocks on the at least one belt, but does not need to unlock and lock the counter-blocks. It is clear that in this case the cross-section in the transverse direction on a side directed towards the opening mechanism and on a side directed towards the closing mechanism and seen against a direction of movement of the link is gradually wider.

According to a further embodiment, the closing mechanisms and the opening mechanisms are placed on two opposite sides of the at least one belt according to the height direction. This means that the closing mechanisms and the opening mechanisms are placed inside the loop of the at least one belt, but for example the closing mechanisms are placed at the top of the loop and the opening mechanisms are placed at the bottom of the loop. It is clear that the reverse is also possible.

In the case of a double-belt press, counter-blocks are only properly accessible for manipulation by an operator at the ends along the longitudinal direction. This means that changing the counter-blocks preferably happens at one of the ends. The counter-blocks should also be unlocked as late as possible and locked as quickly as possible to prevent a counter-block from falling off the link. Preferably, the rotation direction of the double-belt press does not need to change when exchanging the counter-blocks. This means that at an end of the belt press where the counter-blocks emerge from the double-belt press at the bottom, the opening mechanism is placed at the bottom and the closing mechanism at the top, and vice versa if the opening mechanisms and closing mechanisms are placed at the other end of the double-belt press.

According to a preferred embodiment, the locking mechanism comprises a ball. The ball is biased towards the bolt. For example, the ball is biased towards the bolt by a spring. The bolt includes a first recess for receiving a spherical cap of the bolt. The spherical cap of the ball is received in the first recess with the bolt in the closed position. This embodiment is advantageous to prevent the bolt from moving from the closed position to the open position due to movement of the link and vibrations during operation of the double-belt press.

According to a further embodiment, the bolt comprises a second recess for receiving a spherical cap of the ball. The spherical cap of the ball is received in the second recess with the bolt in the open position. This is advantageous to prevent the bolt from moving from the open position to the closed position due to movement of the link and vibrations during operation of the double-belt press. The second recess preferably has an identical size as the first recess. In that case, the spherical cap of the ball received in the second recess is equal to the spherical cap of the ball received in the first recess. This is advantageous because it requires the same amount of force to lock as to unlock the locking mechanism.

According to a preferred embodiment, each counter-block comprises, near two opposite ends along a transverse direction, a magnet for temporarily retaining the counter-block. By nearby is meant that in the transverse direction a first magnet is located in a first third of the counter-block and a second magnet is located in a last third of the counter-block. Preferably, the first magnet is in a first quarter of the counter-block and the second magnet is in a last quarter. More preferably, the first magnet is in a first fifth and the second magnet is in a last fifth.

Alternatively, each link, comprising openings for the protrusions of a counter-block, includes a magnet near two opposite ends along a transverse direction for temporarily retaining the counter-block. In this case, nearby means that, according to the transverse direction, a first magnet is located in a first third of the said link and a second magnet is located in a last third of the said link. Preferably, the first magnet is located in a first quarter of the mentioned link and the second magnet is in a last quarter. More preferably, the first magnet is in a first fifth and the second magnet is in a last fifth.

This embodiment is advantageous for temporarily retaining the counter-blocks while changing the counter-blocks. A counter-block, once placed on the link, is temporarily held by the magnets until the bolts are moved from the open to the closed position. This embodiment is advantageous in combination with an embodiment in which a closing mechanism is used, in particular advantageous if the opening mechanism is placed at the top in the loop of the at least one belt and the closing mechanism is placed at the bottom in the loop of the at least one belt. A counter-block can then be taken off the at least one belt at the top of the at least one belt, after which another counter-block is placed at the top on the at least one belt. The magnets temporarily retain the other counter-block, preventing the other counter-block from falling off the at least one belt while taking a turn from the top to the bottom of the at least one belt. Since the magnets are only necessary during the changing of the counter-blocks, when there is no production of non-flat insulated cladding panels, the disadvantages of a magnet attachment are now of no or less importance.

According to a preferred embodiment, the locking mechanism comprises a holder. The holder is mounted on the link. For example, the holder is welded or glued onto the link. Preferably, the holder is detachably mounted on the link, for example using screws or bolts. The bolt slides into a channel in the holder. The bolt is thus slidable in the channel from the open to the closed position and back. The channel includes a narrowing. The bolt includes a widening for retaining the bolt at an end. The widening at the end of the bolt is wider than the narrowing. In combination with previously described embodiments in which the bolt includes a projection, the widening is at an end opposite the projection. In that case, the projection prevents the bolt from sliding completely through the holder and the widening prevents the bolt from sliding completely out of the holder. This embodiment is particularly advantageous in preventing the bolt from becoming lost in the double-belt press and damaging the double-belt press or non-flat insulated cladding panels. This embodiment is also advantageous in combination with previously described embodiments with a ball in the event, for example, due to a defect, the ball is no longer biased towards the bolt.

According to a preferred embodiment, the double-belt press comprises a first actuator for moving the bolt from the open to the closed position and a second actuator for moving the bolt from the closed to the open position. The actuator is preferably suitable for making a linear movement. The actuator is, for example, a linear motor, a hydraulic piston, a pneumatic piston or another suitable actuator. For example, the actuator makes a linear movement each time a link with a locking mechanism passes, which moves the bolt from the open position to the closed position or from the closed position to the open position.

Optionally, the first actuator is also the second actuator. In that case, the actuator preferably also comprises a gripper for gripping the bolt of the locking mechanism, so that the actuator can not only press against the bolt, but also pull on the bolt.

This embodiment is particularly advantageous in combination with the previously described closing mechanisms and opening mechanisms. The first actuator moves the locking mechanism back and forth between the first position and the second position of the locking mechanism. The second actuator moves the opening mechanism back and forth between the first position and the second position of the opening mechanism. This embodiment is particularly advantageous because the actuators do not have to be operated every time each link passes, but only when locking or unlocking starts or ends.

In a second aspect, the invention relates to a method for producing a non-flat insulated cladding panel.

The method includes the steps of:
- supplying a top layer and a bottom layer of the insulated cladding panel,
- forming the top layer, the bottom layer or the top layer and the bottom layer,
- applying an intermediate insulation layer between the top layer and the bottom layer of the insulated cladding panel,
- pressing the top layer, the intermediate insulation layer and the bottom layer of the insulated cladding panel between a first belt and a second belt of a double-belt press.

The top layer and the bottom layer are preferably unrolled from rolls and supplied continuously.

Forming the top layer, the bottom layer or the top layer and the bottom layer is preferably done in advance in the case of, for example, pre-formed cardboard or fiber-reinforced plastic. In the case of a film/foil, forming the top layer, the bottom layer or the top layer is preferably done by unwinding the film/foil between longitudinally extending tubes or other suitable structures that ensure a desired profile of the film/foil. The tubes or other suitable structures preferably extend to a point where the intermediate insulation is bonded to the film/foil, for example up to the double-belt press. Only after the film/foil has been bonded to the intermediate insulation layer does the film/foil retain the desired profile. In the case of sheet material, the formation of the top layer, the bottom layer or the top layer and the bottom layer is preferably done by profiling the sheet material. Profiling the sheet material of the top layer, the bottom layer or the top layer and the bottom layer is preferably done by guiding the layer in question between profiling wheels. This allows profiling to take place continuously.

It is clear that a profile with a constant cross-section is applied in a longitudinal direction of the insulated cladding panel. It is also clear that if the bottom layer and the top layer are formed, they may have the same or different profiles in a cross-section transverse to the longitudinal direction of the insulated cladding panel.

When applying the intermediate insulation layer, the intermediate insulation layer can be glued to the bottom layer and the top layer in strips with adhesive, for example rock wool or wood-based insulation strips. When applying the intermediate insulation layer, the intermediate insulation layer, for example PIR or PUR, can be injected between the bottom layer and the top layer, after which the intermediate insulation layer expands and adheres to the bottom layer and the top layer. Optionally, a coating can be applied to the bottom layer, the top layer or the bottom layer and the top layer to increase adhesion with the intermediate insulation layer.

The first band and the second band are arranged at a distance from each other according to a height direction. The insulated cladding panel is moved through the double-belt press in a longitudinal direction, transverse to the height direction. A belt of the double-belt press that presses against a non-flat top layer or a non-flat bottom layer includes detachable counter-blocks. The counter-blocks follow a profile of the non-flat layer, so that deeper located parts of the non-flat layer also become pressed down against the intermediate insulation layer. This ensures good adhesion of the non-flat layer to the intermediate insulation layer. It will be apparent that if both the bottom layer and the top layer are non-flat, then the first and the second belt include counter-blocks. Detachable counter-blocks are advantageous for producing non-flat insulated cladding panels with different profiles according to the method.

During the compression of the top layer, the intermediate insulation layer and the bottom layer in the double-belt press, heated air is preferably blown between the first belt and the second belt. Preferably, the heated air has a temperature of at least 100°C, more preferably at least 110°C and even more preferably at least 115°C. This is advantageous for promoting adhesion of the intermediate insulation layer to the bottom layer and the top layer.

It is clear that in the description of the method with insulated cladding panel or non-flat insulated cladding panel in steps where the non-flat insulated cladding panel is not yet finished, the non-flat insulated cladding panel to be manufactured is meant.

According to a preferred embodiment, the method comprises the additional step of placing the detachable counter-blocks on the belt pressing against the non-flat bottom layer, on the belt pressing against the non-flat top layer or on the belt pressing against the non-flat bottom layer and on the belt pressing against the non-flat top layer. The detachable counter-blocks are placed on the said belt before the top layer, the intermediate insulation layer and the bottom layer are compressed between the first belt and the second belt.

Each counter-block comprises a protrusion near two opposite ends along a transverse direction. The transverse direction is perpendicular to the longitudinal direction and perpendicular to the height direction. By nearby is meant that in the transverse direction a first protrusion is located in a first third of the counter-block and a second protrusion is located in a last third of the counter-block. Preferably, the first protrusion is in a first quarter of the counter-block and the second protrusion is in a last quarter. More preferably, the first protrusion is in a first fifth and the second protrusion is in a last fifth. The protrusion extends perpendicular to a surface of the counter-block.

At a free end of the protrusion there is a thickening. Alternatively, the protrusion includes an opening. The opening is suitable for placing an element through the protrusion.

The belt is formed from several interconnected links. The interconnected links run in a loop over wheels, rollers or a combination of both. The links preferably include a substantially flat surface for attaching counter-blocks. A counter-block is placed on a first side of a link of the belt so that the protrusions extend through openings in the link. The first side is preferably the substantially flat surface of the link. Preferably, a counter-block is placed on each link of the belt.

On an opposite second side of the link, a locking mechanism is disposed near each of the two opposite ends. The locking mechanism includes a bolt that is movable from an open position to a closed position and back. After placing the counter-block on the link, the bolt is moved to a closed position. In the closed position, the bolt is positioned between the second side of the link and the thickening of the protrusion, in the case where there is a thickening at the end of the protrusion. In the closed position, the bolt is positioned in the opening in the protrusion, in the event the protrusion comprises an opening. It is clear that in the closed position the counter-block is mechanically secured to the link by the locking mechanism.

This method has the advantage, inter alia, that when starting the production of a non-flat insulated cladding panel, a double-belt press can be quickly equipped with counter-blocks suitable for the profile of the non-flat insulated cladding panel. It is only necessary to lock the counter-blocks using locking mechanisms. An additional advantage of the method is that the counter-blocks are firmly mechanically attached, which means that the chance of a counter-block coming loose and falling, for example in the event of contamination or at higher temperatures during production, is virtually non-existent. This results in fewer production interruptions and reduced production losses due to damaged or lower quality non-flat insulated cladding panels.

According to a preferred embodiment, the double-belt press comprises a closing mechanism along the transverse direction near two opposite ends. A first closing mechanism is intended for closing the locking mechanism near a first end of a link and a second closing mechanism is intended for closing the locking mechanism near a second opposite end of the link. The closing mechanism presses during the passage of a link against the bolt in an open position. In the open position there is a free passage for the thickening of the protrusion through the opening in the link, in the case where there is a thickening at the end of the protrusion. In the open position, the bolt is positioned outside the opening in the protrusion, in the event the protrusion comprises an opening. By pressing the closing mechanism against the bolt in the open position, the bolt is moved from the open position to the closed position. Preferably, the closing mechanism is operated once causing the closing mechanism to move to a position where the closing mechanism presses against the bolts and then the closing mechanism is not moved until the bolts of all closing mechanisms of all counter-blocks have moved to the closed position.

This embodiment is particularly advantageous because the closing mechanisms automatically move all the bolts from an open to a closed position by moving the links of the at least one belt along the closing mechanisms. An operator of the device only needs to place the counter-blocks on the at least one belt, but does not need to lock the counter-blocks.

According to a preferred embodiment, the method for producing a non-flat insulated cladding panel having a different profile includes the additional step of exchanging the counter-blocks. Because the insulated cladding panel to be produced now has a different profile, it is necessary to exchange the counter-blocks. In the additional step, the bolt of each locking mechanism is moved to the open position. The open position is as previously described. After this, the counter-blocks are taken off the links. By now performing previously described steps of the method, other counter-blocks can be placed on the belt, which correspond to the different profile, after which the non-flat insulated cladding panel with the different profile can be produced according to the method.

According to a further embodiment, the double-belt press comprises an opening mechanism along the transverse direction near two opposite ends. A first opening mechanism is intended for opening the locking mechanism near a first end of a link and a second opening mechanism is intended for opening the locking mechanism near a second opposite end of the link. The opening mechanism presses against the bolt in the closed position when a link passes by. By pressing the opening mechanism against the bolt in the closed position, the bolt is moved from the closed position to the open position. Preferably, the opening mechanism is operated once, causing the opening mechanism to move to a position where the opening mechanism presses against the bolts, and then the opening mechanism is not moved until the bolts of all locking mechanisms of all counter-blocks have moved to the open position.

This embodiment is particularly advantageous because the opening mechanisms automatically move all the bolts from a closed to an open position by moving the links of the at least one belt along the opening mechanisms. An operator of the device only needs to remove the counter-blocks from the at least one belt, but does not need to unlock the counter-blocks.

According to a preferred embodiment, a counter-block is placed on a link, viewed according to the height direction, on a first side of the belt during the passage of the link. The counter-block is temporarily attached to the link using magnets. The magnets are incorporated in the counter-block or in the link. The bolt is moved from the open to the closed position on an opposite second side of the belt. This mechanically attaches the counter-block to the link, meaning that the magnets are essentially no longer needed to attach the counter-block to the link.

This embodiment is advantageous because it is advisable to place counter-blocks at an end of the double-belt press in the longitudinal direction, since the counter-blocks are only properly accessible to an operator at an end of the double-belt press. It is also advantageous to release the locking mechanism as late as possible and lock it as soon as possible. This means that the locking mechanism is best unlocked according to the height direction on a first side of the belt, with or without an opening mechanism described above, and immediately locked on an opposite second side of the belt, at the same end. This also means that the counter-blocks must be temporarily attached to the belt so that the counter-blocks do not fall off the belt when taking a turn from the first side of the belt to the second side of the belt. This is avoided by using the magnets.

One skilled in the art will appreciate that a device according to the first aspect is preferably configured to perform a method according to the second aspect and that a method according to the second aspect is preferably carried out using a device according to the first aspect. Each feature described in this document, both above and below, may therefore relate to any of the four aspects of the present invention.

In a third aspect, the invention relates to a non-flat insulated cladding panel. The non-flat insulated cladding panel comprises a bottom layer, an intermediate insulation layer and a top layer. The non-flat insulated cladding panel is manufactured according to a method according to the first aspect.

Such a non-flat insulated cladding panel is advantageous because of the high quality of finishing. Due to the fact that the counter-blocks in the double-belt press are guaranteed to remain attached to the belt pressing against the non-flat layer, the bottom layer, the intermediate insulation layer, and the top layer are very well bonded to each other, making the chance of the layers coming apart over time very small. An additional advantage is that due to a low occurrence of production interruptions and production losses, the high quality of finishing can be obtained at the same or lower production cost.

In a fourth aspect, the invention relates to a use of a device according to the first aspect and/or a method according to the second aspect for producing insulated cladding panels with an injected intermediate insulation layer.

This use results in an improved production of non-flat insulated cladding panels with an injected intermediate insulation layer or a glued intermediate insulation layer. The intermediate insulation layer is injected between the bottom layer and the top layer just before compressing a bottom layer, top layer, and the intermediate insulation layer in the double-belt press, after which the intermediate insulation layer expands. It is possible that the injected intermediate insulation layer is initially still partially fluid and flows between a belt of the double-belt press and a counter-block. When gluing an intermediate insulation layer, it is possible that glue will flow between a belt of the double-belt press and a counter-block. Using the device according to the first aspect and/or the method according to the second aspect prevents the counter-block from becoming detached from the belt and falling. This means there are fewer production interruptions and there is also less production loss due to damaged or lower quality non-flat insulated cladding panels.

In what follows, the invention is described by means of non-limiting figures illustrating the invention, and are not intended or to be interpreted as limiting the scope of the invention.

### DESCRIPTION OF THE DRAWINGS

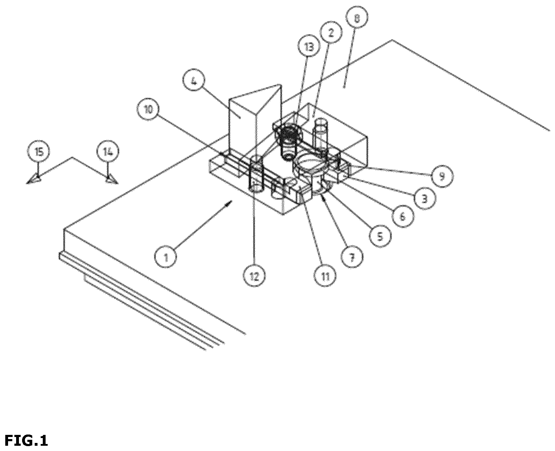

**Figure 1** shows a perspective view of a locking mechanism according to an embodiment of the present invention.
   The locking mechanism (1) comprises a holder (2) and a bolt (3). The holder (2) is screwed through a link on the second side (8) of the link with two screws (12). A counter-block is placed on the first side of the link. The counter-block is not visible in Figure 1. The counter-block comprises a protrusion (5) along a transverse direction (14) near two opposite ends of the counter-block. The transverse direction (14) is perpendicular to a longitudinal direction (15). Figure 1 shows only 1 protrusion (5). At a free end of the protrusion (5) there is a thickening (6). The protrusion (5) in this embodiment comprises two cylinders positioned on top of each other. A first cylinder is near the counter-block and at a free end of the second cylinder is the thickening (6). The thickening (6) is a disk with a diameter larger than a diameter of the second cylinder of the protrusion (5). The thickening (6) is a disk with a diameter equal to a diameter of the first cylinder. In this embodiment, the protrusion (5) is manufactured by milling a ring from the first cylinder, creating the second cylinder and the thickening (6). The protrusion (5) is placed through an opening (7) in the link. The holder (2) comprises a channel (9). The bolt (3) slides in the channel (9) from an open position to a closed position and back. The bolt (3) is in the closed position in Figure 1, wherein the bolt (3) is positioned between the second side (8) of the link and the thickening (6) of the protrusion (5). As a result, the protrusion (5) can no longer be removed from the opening (7) and the counter-block is mechanically attached to the link. In the open position there is a free passage for the thickening (6) of the protrusion (5) through the opening (7). The channel (9) comprises a narrowing (10). The bolt (3) includes a widening (11) for retaining the bolt (3) against the narrowing (10). A set screw (2) is screwed into the holder (13). Under the set screw (13) there is a spring and a ball. The spring and ball are not shown in Figure 1. The ball is pretensioned by the spring towards the bolt (3). A spherical cap of the ball is accommodated in a first recess in the bolt (3), leaving the bolt (3) in the closed position. The first recess is not visible in Figure 1. The locking mechanism (1) includes a protrusion (3) on the bolt (4). The protrusion (4) extends perpendicular to the bolt (3). The protrusion (4) is located at an end of the bolt (3) opposite the end with the widening (11). The protrusion (4) prevents the bolt (3) from sliding through the channel (9) into the holder (2). The protrusion (4) has in a plane parallel to the first side of the link a cross-section that seen in the longitudinal direction (15) is gradually wider. In this case the cross section is an acute-angled triangle. A closing mechanism pressing against a left triangular side adjacent to the acute angle, will, when the link moves along the longitudinal direction (15), but in the opposite direction, cause the bolt (3) to move to the right into the closed position. An opening mechanism pressing against a right triangular side adjacent to the acute angle, will, when the link moves along the longitudinal direction (15), but in the opposite direction, cause the bolt (3) to move to the left towards the open position.

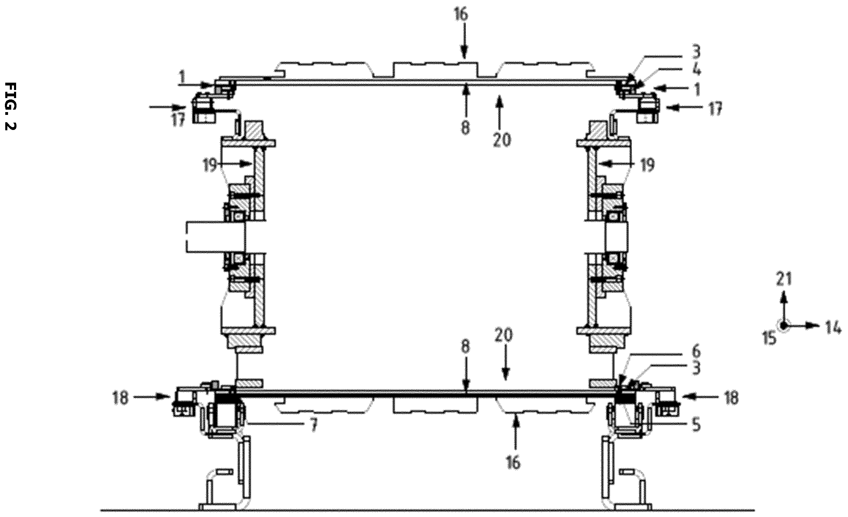

**Figure 2** shows a schematic cross-section of a device according to an embodiment of the present invention.
   Figure 2 shows a frame (19) of a single belt of a double-belt press. A belt formed by interconnected links (20) runs around the frame (19). For the simplicity of Figure 2, no rollers, wheels or other possible guide elements for guiding the links (20) around the frame (19) are shown. A counter-block (16) is placed on every link (20). The protrusions (5) of the counter-blocks (16) are placed through openings (7) in the links (20). Locking mechanisms (1) are placed on the second side (8) of the links. The locking mechanisms (1) are similar to the locking mechanism in Figure 1. For the simplicity and clarity of Figure 2, only the bolts (3) are shown. According to the height direction (21), at the top and inside a loop formed by the links (20), an opening mechanism (17) is attached to the frame (19). The opening mechanism (17) can be moved from a first position to a second position and back. In the first position, the opening mechanism (17) presses against the protrusion (4) of the bolt (3). In the second position there is a free passage for the protrusion (4). Figure 2 shows the opening mechanisms (17) in the first position and the bolts (3) at the top in the closed position. The opening mechanisms (17) include a roller which, in the second position, presses against an inclined side of the protrusion (4). The link (20) moves at the top along the longitudinal direction (15), i.e., towards the reader. The roller of the opening mechanism (17) pushes the bolt (3) outwards to the open position. According to the height direction (21), a closing mechanism (18) is attached to the frame (19) at the bottom and inside the loop formed by the links (20). The closing mechanism (18) can be moved from a first position to a second position and back. In the first position, the closing mechanism (18) presses against the protrusion (4) of the bolt (3). In the second position there is a free passage for the protrusion (4). Figure 2 shows the closing mechanisms (18) in the first position and the bolts (3) at the bottom in the open position. The closing mechanisms (18) include a roller which, in the second position, presses against a slanted side of the protrusion (4). The link (20) moves at the bottom along the longitudinal direction (15), but in the opposite direction, i.e., away from the reader. The roller of the closing mechanism (18) pushes the bolt (3) inwards, to the closed position. It is clear that the position and orientation of the locking mechanisms (1) and correspondingly the position and orientation of the opening mechanisms (17) and the closing mechanisms (18) can be changed. In a double-belt press, a second belt is placed at a distance from the belt in Figure 2, along the height direction (21), which also runs in a loop around a frame (19). Depending on whether or not this second band presses against a non-flat layer of the insulated cladding panel, this band also includes locking mechanisms (1) and preferably closing mechanisms (18) and opening mechanisms (17).

The numbered elements in the figures are:
1. Locking mechanism
2. Holder
3. Bolt
4. Projection
5. Protrusion
6. Thickening
7. Opening
8. Second side link
9. Channel
10. Narrowing
11. Widening
12. Screw
13. Set screw
14. Transverse direction
15. Longitudinal direction
16. counter-block
17.Opening mechanism
18. Closing mechanism
19. Belt frame
20. Link
21. Height direction

## Claims

1. Device for producing a non-flat insulated cladding panel, comprising a double-belt press for pressing together a bottom layer, a top layer and an intermediate insulation layer of the non-flat insulated cladding panel, wherein the double-belt press comprises a first belt and a second belt, wherein the first belt and the second belt extend in a longitudinal direction, wherein the first belt and the second belt are arranged at a distance from each other in a height direction, transverse to the longitudinal direction, to form a passage for the non-flat insulated cladding panel and wherein at least one belt from the group formed by the first belt and the second belt comprises detachable counter-blocks for pressing against a non-flat layer of the insulated cladding panel, **characterized in that** each counter-block comprises a protrusion near two opposite ends along a transverse direction, wherein the transverse direction is perpendicular to the longitudinal direction and the height direction, wherein at a free end of the protrusion there is a thickening or wherein the protrusion includes an opening, wherein the at least one belt is formed from several interconnected links, wherein each counter-block is placed on a first side of a link, wherein the link comprises an opening near two opposite ends along the transverse direction through which a protrusion is placed, wherein on an opposite second side of the link, a locking mechanism is disposed near each of the two opposite ends, wherein the locking mechanism comprises a bolt movable from an open position to a closed position and back, wherein in the closed position the bolt is positioned between the second side of the link and the thickening of the protrusion, or the bolt is positioned in the opening in the protrusion, and wherein in the open position there is a free passage for the thickening of the protrusion through the opening, or the bolt is positioned outside the opening in the protrusion.

2. The device according to claim 1, **characterized in that** the locking mechanism comprises a projection on the bolt, wherein the projection extends in a direction transverse to the first side of the link, wherein the projection, viewed in a plane parallel to the first side of the link, has a cross-section which, viewed in a direction transverse to the transverse direction, is gradually wider, wherein the double-belt press comprises a closing mechanism along the transverse direction near two opposite ends, wherein the closing mechanism can be moved from a first position to a second position and back, wherein the closing mechanism in the first position presses against the projection for moving the bolt to the closed position and wherein in the second position of the closing mechanism there is a free passage for the projection.

3. The device according to claim 1 or 2, **characterized in that** the locking mechanism comprises a projection on the bolt, wherein the projection extends in a direction transverse to the first side of the link, wherein the projection, viewed in a plane parallel to the first side of the link, has a cross-section which, viewed in a direction transverse to the transverse direction, is gradually wider, wherein the double-belt press comprises an opening mechanism along the transverse direction near two opposite ends, wherein the opening mechanism can be moved from a first position to a second position and back, wherein the opening mechanism in the first position presses against the projection to move the bolt to the open position and wherein in the second position of the opening mechanism there is a free passage for the projection.

4. The device according to claims 2 and 3, **characterized in that** the double-belt press comprises closing mechanisms and opening mechanisms, wherein the closing mechanisms and the opening mechanisms are placed on two opposite sides of the at least one belt according to the height direction.

5. The device according to any of **the preceding claims 1-4, characterized in that** the locking mechanism comprises a ball, where the ball is biased towards the bolt, the bolt comprising a first recess for receiving a spherical cap of the ball, wherein the spherical cap of the ball is accommodated in the first recess in the closed position.

6. The device according to claim 5, **characterized in that** the bolt comprises a second recess for receiving a spherical cap of the ball, wherein the spherical cap of the ball is accommodated in the second recess in the open position.

7. The device according to any of the preceding claims 1-6, **characterized in that** each counter-block or each link, comprising openings for the protrusions of a counter-block, near two opposite ends along a transverse direction comprises a magnet for temporarily retaining the counter-block.

8. The device according to any of the preceding claims 1-7, **characterized in that** the locking mechanism comprises a holder, where the holder is mounted on the link, wherein the bolt slides into a channel in the holder, where the channel comprises a narrowing, wherein the bolt has a widening at one end for retaining the bolt, which is wider than the narrowing.

9. The device according to any of the preceding claims 1-8, **characterized in that** the double-belt press comprises a first actuator for moving the bolt from the open to the closed position and a second actuator for moving the bolt from the closed to the open position.

10. Method for producing a non-flat insulated cladding panel, comprising the steps of:
- supplying a top layer and a bottom layer of the insulated cladding panel;
- forming the top layer, the bottom layer or the top layer and the bottom layer;
- applying an intermediate insulation layer between the top layer and the bottom layer of the insulated cladding panel;
- pressing the top layer, the intermediate insulation layer and the bottom layer of the insulated cladding panel between a first belt and a second belt of a double-belt press, wherein the first belt and the second belt are arranged at a distance from each other in a height direction, wherein the insulated cladding panel is moved through the double-belt press in a longitudinal direction, transverse to the height direction, and wherein a belt of the double-belt press that presses against a non-flat top layer or a non-flat bottom layer comprises detachable counter-blocks;
**characterized in that** the method comprises the additional step of placing the detachable counter-blocks on the belt pressing against the non-flat bottom layer, on the belt pressing against the non-flat top layer, or on the belt pressing against the non-flat bottom layer and on the belt pressing against the non-flat top layer, wherein each counter-block comprises a protrusion near two opposite ends along a transverse direction, wherein the transverse direction is perpendicular to the longitudinal direction and the height direction, wherein at a free end of the protrusion there is a thickening or wherein the protrusion includes an opening, wherein the belt is formed from several interconnected links, wherein a counter-block is placed on a first side of a link of the belt so that the protrusions extend through openings in the link, wherein a locking mechanism, comprising a bolt, is placed near an opposite second side of the link at two opposite ends along a transverse direction, wherein the bolt is moved to a closed position with the bolt positioned between the second side of the link and the thickening of the protrusion, or the bolt positioned in the opening in the protrusion.

11. The method according to claim 10, **characterized in that** the double-belt press comprises a closing mechanism along the transverse direction near two opposite ends, wherein the closing mechanism presses against the bolt in an open position as a link passes, thereby moving the bolt from the open to the closed position.

12. The method according to claim 10 or 11, **characterized in that** the method for producing a non-flat insulated cladding panel having a different profile includes the additional step of exchanging the counter-blocks, wherein the bolt is moved to an open position, wherein in the open position there is a free passage for the thickening of the protrusion through the opening, respectively the bolt is positioned outside the opening in the protrusion and wherein the counter-blocks are taken off the links.

13. The method according to claim 12, **characterized in that** the double-belt press comprises an opening mechanism along the transverse direction near two opposite ends, wherein the opening mechanism presses against the bolt in the closed position as a link passes, thereby moving the bolt from the closed to the open position.

14. The method according to any of claims 10-13, **characterized in that** a counter-block is placed on a link, viewed according to the height direction, on a first side of the belt during the passage of the link, wherein the counter-block is temporarily attached to the link using magnets and the bolt on an opposite second side of the belt is moved from the open to the closed position.

15. Non-flat insulated cladding panel, comprising a bottom layer, an intermediate insulation layer and a top layer, **characterized in that** the non-flat insulated cladding panel is manufactured by a method according to any of claims 10-14.

16. Use of a device according to any of claims 1-9 and/or a method according to any of claims 10-14 for producing insulated cladding panels with an injected or glued intermediate insulation layer.
